# EUROPÄISCHE PATENTSCHRIFT

(11) **EP 2 009 312 B1**
(45) Veröffentlichungstag und Bekanntmachung des Hinweises auf die Patenterteilung: **16.12.2009**
(21) Anmeldenummer: 08010022.5
(22) Anmeldetag: 02.06.2008
(51) Int. Cl.: F16D 48/06

(54) **Elektrisch betriebener Kupplungsaktor**
Electrically operated clutch actuator
Actionneur d'embrayage actionné électriquement

(30) Priorität: 28.06.2007 DE 102007029937
(43) Veröffentlichungstag der Anmeldung: 31.12.2008
(73) Patentinhaber: LuK Lamellen und Kupplungsbau Beteiligungs KG, 77815 Bühl (DE)
(72) Erfinder: Moebs, Francis, 67550 Eckwersheim (FR); Zimmermann, Martin, 77880 Sasbach (DE); Menzel, Michael, 77833 Ottersweier (DE); Gramann, Matthias, 77871 Renchen (DE)

(56) Entgegenhaltungen:
- DE-A1-102006 001 468
- GB-A- 2 256 021
- US-A1- 2007 135 260

## Beschreibung

Die Erfindung betrifft einen elektrisch betriebenen Kupplungsaktor mit einem auf eine Kupplung einwirkenden, von einem Rotor eines Elektromotors angetriebenen Betätigungselement.

Kupplungsaktoren für Kupplungen, die elektrisch mittels eines Elektromotors betätigt werden, sind bekannt. Die DE 10 2006 043 330 A1 zeigt ein Beispiel eines so genannten Hebeleinrückers, bei dem ein Betätigungsglied in Form eines Hebels von einer von einem Elektromotor angetriebenen Rolleneinheit axial verlagert wird und damit eine Kupplung entgegen einer Rückstellkraft eingerückt wird.

Dokument DE 102 006 00/468 A1 offenbart ein Verfahren zum Verstellen einer Kupplung mittels eines Elektromotors.

Wird die Spannung am Elektromotor abgeschaltet, beispielsweise weil an dem den Elektromotor steuernden Steuergerät die Versorgungsleitung unterbrochen wird oder die Steuerung selbst einen Reset verursacht, wird die Kupplung durch die fehlende Hemmung des Betätigungsgliedes durch den Elektromotor unter Wirkung der Rückstellkraft geöffnet. Durch diese Rückstellkräfte kehrt der Kupplungsaktor in einen kraftfreien Zustand, der durch einen Anschlag definiert sein kann zurück.

Aufgabe der vorliegenden Anmeldung ist die Verbesserung derartiger Kupplungsaktoren insbesondere bezüglich ihres Komfort und ihrer Langzeitbeständigkeit. Dabei soll eine Verbesserung ohne hohe Kosten und insbesondere ohne großen zusätzlichen Aufwand an mechanischen, vorzugsweise bewegten Bauteilen erfolgen.

Die Aufgabe wird durch einen elektrisch betriebenen Kupplungsaktor mit einem auf eine Kupplung einwirkenden, von einem Rotor eines Elektromotors angetriebenen Betätigungselement gelöst, wobei der Kupplungsaktor im nicht angetriebenen Zustand durch Rückstellkräfte der Kupplung an einen Anschlag bewegt wird und die Drehzahl des Rotors durch einen generatorischen Betrieb des Elektromotors im nicht angetriebenen Zustand in Abhängigkeit von der durch den generatorischen Betrieb induzierten Spannung vermindert wird.

Als Kupplungsaktoren eignen sich dabei alle Kupplungsaktoren, die während einer Betätigung durch einen Elektromotor entgegen einer Kraft geschlossen oder geöffnet werden und in diesem Zustand mittels einer vom Elektromotor aufgewendeten Kraft gehalten werden. Wird der Elektromotor anschließend mit einer geringeren als der zum Halten des Kupplungszustands notwendigen Energie bestromt, kehrt die Kupplung wieder kontrolliert in den entspannten Zustand zurück. Insbesondere sind erfindungsgemäße Kupplungsaktoren für so genannte Doppelkupplungsgetriebe vorteilhaft, die zwangsweise zugedrückt oder zugezogen werden und die nach Abschalten oder einem Ausfall der Versorgungsspannung selbstständig in den geöffneten Zustand zurückkehren, um ein Verblocken des Getriebes bei einem Reibschluss beider Kupplungen zu vermeiden.

In besonders vorteilhafter Weise wird durch die Erfindung das schnelle Öffnen der Kupplung und ein damit verbundener harter Anschlag von in den Ausgangszustand zurückkehrenden Kupplungsbauteilen vermieden. Derartige Bauteile können beispielsweise Bauteile eines Drehantriebs wie Spindeln, Spindelmutter, Lager und Rolleneinheiten sein, die bei einem sanften Anschlagen an einen Endanschlag des Kupplungsaktors entsprechend ausgelegt werden können und langzeitstabiler und weniger verschleißanfällig und ausfallsicherer werden.

Unter einem generatorischen Betrieb kann eine Betriebsweise des Elektromotors verstanden werden, bei der zumindest eine Phase des Elektromotors so beschaltet wird, dass die infolge der Drehbeschleunigung des Rotors bei einer Rückbewegung des Betätigungsglieds des Kupplungsaktors entstehende Induktionsenergie abgebaut und damit der Rotor gebremst wird. Dabei ist unter dem Begriff einer Phase des Elektromotors jede mechanische Form eines Motors erfasst, die - entsprechend kommutiert - von einer Spannung beaufschlagt werden und eine entsprechend magnetische Funktion in einem Elektromotor erfüllen kann. Der Elektromotor kann daher in einer konventionellen Bauweise mit Wicklungen, wobei einer Phase mehrere parallel und/oder seriell geschaltete Wicklungen zugeordnet sein können, oder als Scheibenläufer ausgestaltet sein. Der Elektromotor kann mittels Bürsten kommutiert sein, besonders vorteilhaft ist die Verwendung einer elektronischen Kommutation. Die einzelnen Phasen werden von Treibern, die im Steuergerät errechnete Steuersignale über einen Signalausgang am Steuergerät mittels eines Signalpegels steuern, mit einer Versorgungsspannung beaufschlagt, wobei vorzugsweise Mosfets die Versorgungsspannungen vom Signalpegel abhängig durchschalten. Vorzugsweise kann ein elektronisch kommutierter Gleichstrommotor angewendet werden, dessen Leistung durch eine Pulsweitenmodulation steuerbar ist, indem eine Bestromung der Wicklungen mit einer Konstantspannung über zeitlich unterschiedlich lange Spannungspulse erfolgt.

Der generatorische Betrieb wird erfindungsgemäß in Abhängigkeit von der induzierten Spannung eingeleitet. Beispielsweise wird ab einer vorgegebenen Grenzspannung der generatorische Betrieb aktiviert. Dabei hat es sich als vorteilhaft erwiesen, wenn die an einer Phase abgreifbare induzierte Spannung vor der Verwendung in einem Schaltkreis zur Schaltung des generatorischen Betriebszustands gleichgerichtet wird.

In einem vorteilhaften Ausführungsbeispiel kann bei fehlender Versorgungsspannung ein Transistor in Abhängigkeit von der gleichgerichteten induzierten Spannung eine Eingangsspannung für einen zweiten Transistor, der die Gate-Spannung der Mosfets steuert, ausgeben. Auf diese Weise kann unabhängig von einer äußeren Versorgungsspannung die induktiv durch die Rotorbewegung erzeugte Spannung gleichzeitig die Speisung für eine Zusatzelektronik sein, die dafür sorgt, dass die Mosfets bei fehlender Versorgungsspannung so angesteuert werden, dass ein generatorischer Betrieb des Elektromotors erfolgt. Um eine derartige Zusatzelektronik dann auszuschalten, wenn die Steuerelektronik bei Anwesenheit einer Versorgungsspannung in normalem Betrieb elektromotorisch betrieben werden soll, kann ein weiterer Transistor verwendet werden, um die Wirkung der beiden Transistoren der Zusatzelektronik auszuschalten. Um zusätzlich einen negativen Effekt durch den Einfluss gegebenenfalls noch vorhandener Spannungen oder Restspannungen der Treiber auszuschalten, können diese bei fehlender Versorgungsspannung an ihrer Verbindung zu den Mosfets hochohmig geschaltet werden.

Vorzugsweise werden nicht alle Phasen des Elektromotors in den generatorischen Betrieb geschaltet. Die Anzahl der zu schaltenden Phasen hängt insbesondere von der gewünschten Verzögerung der Drehzahl des Rotors ab. Weiterhin soll die Drehzahl nicht zu stark vermindert werden, da ansonsten die induzierte Spannung zusammenbrechen kann. Es hat sich als vorteilhaft erwiesen, wenn zwei bis vier, vorzugsweise zwei oder drei von vorzugsweise sechs Mosfets, die die Phasen steuern, in den generatorischen Betrieb geschaltet werden, das heißt kurzgeschlossen werden. Dabei kann an zumindest einer nicht geschalteten Phase die induzierte Spannung abgegriffen werden und in gewünschter Weise gleichgerichtet werden.

In einem weiteren vorteilhaften Ausführungsbeispiel kann bei vorhandener Versorgungsspannung und einem Abschalten des Elektromotors durch einen Reset, indem die Treiber die Mosfets hochohmig schalten, zumindest ein Pegel an einem Ausgang des Treibers für eine entsprechende Wicklung wieder kurzgeschlossen werden, damit diese in den generatorischen Betrieb geschaltet wird. Ein derartiges Ausführungsbeispiel ist einfach aufgebaut, da die induzierte Spannung lediglich zur spannungsabhängigen Schaltung der Pegel verwendet werden muss. Zusätzlich kann, sofern eine zusätzliche Energieversorgung bei ebenfalls fehlender Versorgungsspannung, beispielsweise bei Unterbrechung der Versorgungsleitung, gewünscht ist, eine weitere Energiequelle vorgesehen sein, beispielsweise in Form eines Kondensators, der kurzzeitig die nötige elektrische Energie bereitstellt.

Die Erfindung wird anhand der Figuren der Figuren 1 bis 3 näher erläutert. Dabei zeigen:
- Figur 1: ein Schaltbild eines Ausführungsbeispiels einer Endstufe für einen Elektromotor eines Kupplungsaktors,
- Figur 2: ein Schaltbild eines Ausführungsbeispiels für eine Zusatzelektronik zur Schaltung eines generatorischen Betriebs bei fehlender Versorgungsspannung
und
- Figur 3: ein Schaltbild eines Ausführungsbeispiels für eine Zusatzelektronik bei noch vorhandener Versorgungsspannung mit alternativer Spannungsversorgung.

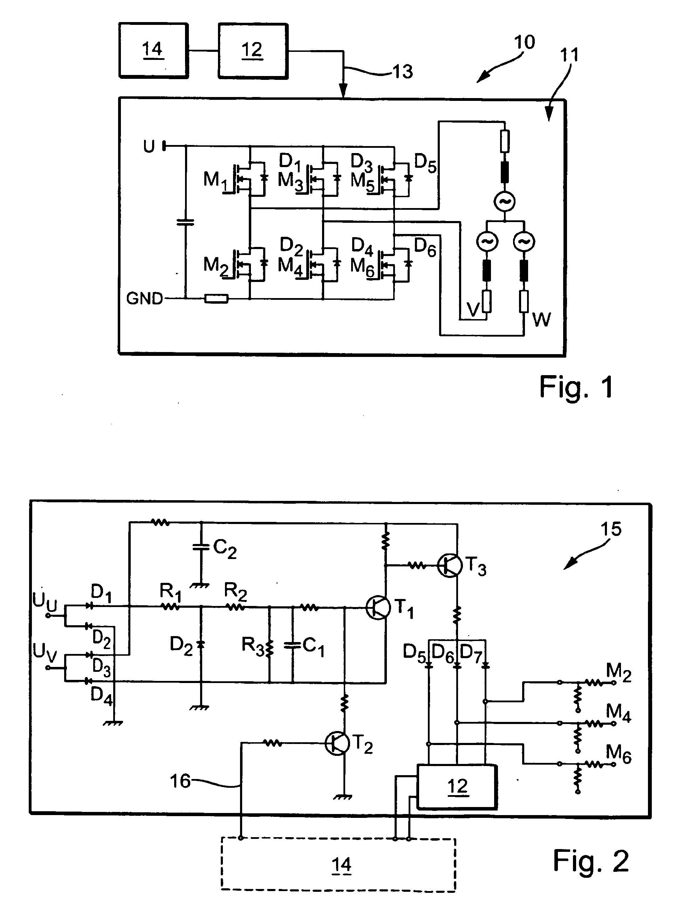

Die Figur 1 zeigt ein Schaltbild einer Endstufe 10 für einen schematisch dargestellten Elektromotor 11 mit den Phasen V, W, X. Die Phasen V, W, X werden jeweils von Mosfets M1, M3, M5 mit der Versorgungsspannung U beziehungsweise von Mosfets M2, M4, M6 mit Erde GND verbunden. Die Dioden D1, D2, D3, D4, D5, D6, die in die Mosfets integriert sind, verhindern Fehlströme. Die Gates der Mosfets M1 bis M6 werden mittels über die vereinfacht dargestellte Gate-Leitung 13, die einen Signalpegel an jedes Gate der Mosfets heranführt, gesteuert. Entsprechende Pegel werden vom Treiber 12 ausgegeben, der entsprechende Steuersignale vom Mikroprozessor 14 erhält. Im Falle eines Ausfalls der Versorgungsspannung U, die auch den Mikroprozessor 14 und den Treiber 12 versorgt, werden alle Mosfets 6 hochohmig und der Elektromotor 11 kann die eingestellte Kupplungsposition eines nicht selbsthaltenden Kupplungsaktors nicht mehr halten. Die Kupplung kehrt in ihre Ausgangslage zurück und verdreht dabei über die mechanische Ankopplung des Elektromotors 11 an das Betätigungsglied den Rotor. Ein zeitlich unbegrenztes Kurzschließen der Wicklungen V, W, X mittels der Mosfets M2, M4, M6 würde zu einem unkontrollierten Abbremsen des Rotors führen und die Dynamikanforderung des Notöffnens wäre nicht mehr erfüllt. Vielmehr könnte der Kupplungsaktor an einer unvorhergesehenen Position zum Stillstand kommen, bei dem die Kupplung noch nicht den Ausgangszustand erreicht hat.

Figur 2 zeigt eine Zusatzelektronik 15, die eine vorgegebene Öffnungszeit gewährleistet, die aber die kinetische Energie des Rotor beim Zurückfahren in die Ausgangsposition der Kupplung abbremst, indem zwei oder drei Phasen des Elektromotors generatorisch in Abhängigkeit von der induzierten Spannung betrieben werden. Wird beispielsweise von dem Mikroprozessor 14 über die Leitung 16 ein Reset-Signal ausgegeben, wird mittels des Transistors T₂ die Zusatzelektronik 15 aktiviert. An den Motorklemmen Uᵤ und U_{w} wird die Spannung der Wicklungen abgegriffen und mittels der Dioden D₁, D₂, D₃ und D₄ gleichgerichtet, wobei die Dioden D₂ und D₄ bereits wie in Figur 1 gezeigt bereits als Dioden D2 und D4 in den Mosfets enthalten sind. Diese gleichgerichtete Spannung wird mittels der Zener-Diode D_{z} begrenzt. Eine Filterung des Spannungssignals erfolgt mittels der in den Schaltkreis entsprechend eingeschalteten Widerstände R₁, R₂ und R₃, der zu dem Kondensator C₁ parallel geschaltet ist. Die Widerstände R₁, R₂ und R₃ bilden gleichzeitig einen Spannungsteiler zur Anpassung der gemessenen induzierten Spannung an die Basis des Transistors T₁. Dieser schaltet in Abhängigkeit der Drehzahl des Rotors infolge der sich ergebenden induzierten Spannung in den Wicklungen des Elektromotors den Transistor T₃, die Gate-Spannungen der Mosfets M2, M4 und M6 schaltet. Entsprechend Figur 1 werden diese und dem folgend die Wicklungen niederohmig geschaltet und bremsen infolge des generatorischen Moments den Rotor und damit das mit diesem wirksam mechanisch verbundene Betätigungsglied gegen die entstehenden Rückstellkräfte ab. Der ebenfalls mit den Gates der Mosfets verbundene Treiber 12 ist während eines Resets hochohmig. Die Dioden D₅, D₆, und D₇ sperren im die Zusatzelektronik 15 gegen eine Einwirkung des Treibers 12. Die gleichgerichtete induzierte Spannung dient gleichzeitig als Spannungsquelle für die Zusatzelektronik. Die übrigen ohne Bezeichnung dargestellten elektronischen Symbole entsprechen einer bekannten Auslegung einer Halbleiterschaltung.

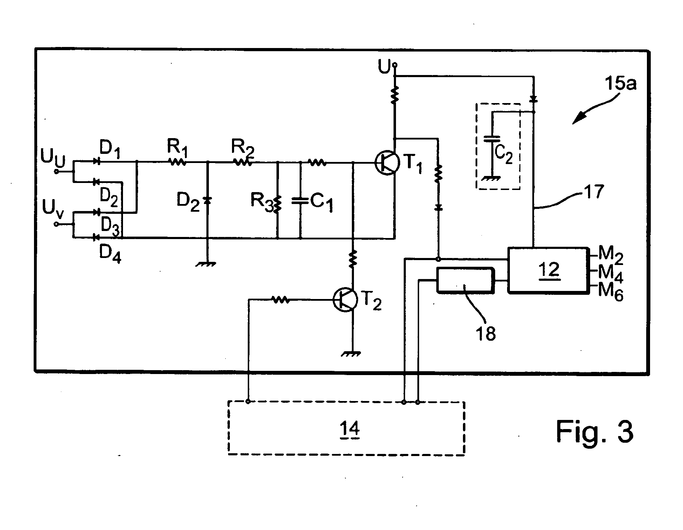

Die Figur 3 zeigt ein Ausführungsbeispiel einer Zusatzelektronik 15a, die sich von der Zusatzelektronik 15 der Figur dadurch unterscheidet, dass aus der induzierten Spannung keine Spannungsquelle generiert wird. Es wird davon ausgegangen, dass die Versorgungsspannung U am Treiber 12 vorhanden ist und über die Leitung 7 in die Zusatzelektronik 15a eingespeist wird. Sollte die Versorgungsspannung U im Treiber dennoch ausfallen, kann ein während des Normalbetriebs aufgeladener Kondensator C₂ für die zum Verzögern des Rotors notwendige Zeit die Spannungsversorgung übernehmen. Gegenüber der Figur 1 können insbesondere der Transistor T₃ und die ihn abstimmenden entfallen. Zusätzlich ist zwischen dem Mikroprozessor 12 und dem Treiber 12 eine Pegelvorgabe vorgesehen, in der mittels PullUp- oder PullDown-Widerständen während eines Resets die Pegel für die Mosfets M₂, M₄ und M₆ so eingestellt sind, dass sie geschaltet sind, während die Pegel für die übrigen Mosfets (siehe Figur 1) hochohmig sind. Die nicht detailiert beschriebenen Bauteilbezeichnungen entsprechen denen der Figur 1.

**Bezugszeichenliste**

| | | | |
|---|---|---|---|
| 10 | Endstufe | D₅ | Diode |
| 11 | Elektromotor | D₆ | Diode |
| 12 | Treiber | D_{z} | Zener-Diode |
| 13 | Gate-Leitung | GND | Erde |
| 14 | Mikroprozessor | M1 | Mosfet |
| 15 | Zusatzelektronik | M2 | Mosfet |
| 15a | Zusatzelektronik | M3 | Mosfet |
| 16 | Leitung | M4 | Mosfet |
| 17 | Leitung | M5 | Mosfet |
| 18 | Pegelvorgabe | M6 | Mosfet |
| C₁ | Kondensator | R₁ | Widerstand |
| C₂ | Kondensator | R₂ | Widerstand |
| D1 | Diode | R₃ | Widerstand |
| D2 | Diode | T₁ | Transistor |
| D2 | Diode | T₂ | Transistor |
| D4 | Diode | T₃ | Transistor |
| D5 | Diode | U | Spannung |
| D6 | Diode | Uᵤ | Klemmenspannung |
| D₁ | Diode | U_{w} | Klemmenspannung |
| D₂ | Diode | V | Wicklung |
| D₃ | Diode | W | Wicklung |
| D₄ | Diode | X | Wicklung |

## Patentansprüche

1. Elektrisch betriebener Kupplungsaktor mit einem auf eine Kupplung einwirkenden, von einem Rotor eines Elektromotors (11) angetriebenen Betätigungselement, wobei der Kupplungsaktor im nicht angetriebenen Zustand durch Rückstellkräfte der Kupplung an einen Anschlag bewegt wird, **dadurch gekennzeichnet, dass** die Drehzahl des Rotors durch einen generatorischen Betrieb des Elektromotors (11) im nicht angetriebenen Zustand in Abhängigkeit von der durch den generatorischen Betrieb induzierten Spannung vermindert wird.

2. Elektrisch betriebener Kupplungsaktor nach Anspruch 1, **dadurch gekennzeichnet, dass** die induzierte Spannung gleichgerichtet wird.

3. Elektrisch betriebener Kupplungsaktor nach Anspruch 1 oder 2, **dadurch gekennzeichnet, dass** in Abhängigkeit von der induzierten Spannung zumindest zwei Phasen (V, W, X) des Elektromotors (11) im generatorischen Betrieb kurzgeschlossen wird.

4. Elektrisch betriebener Kupplungsaktor nach Anspruch 3, **dadurch gekennzeichnet, dass** jede Phase (V, W, X) mittels Mosfets (M1, M2, M3, M4, M5, M6) an eine Versorgungsspannung schaltbar ist.

5. Elektrisch betriebener Kupplungsaktor nach einem der Ansprüche 1 bis 4, **dadurch gekennzeichnet, dass** der Elektromotor (11) ein Gleichstrommotor ist.

6. Elektrisch betriebener Kupplungsaktor nach einem der Ansprüche 1 bis 5, **dadurch gekennzeichnet, dass** der Elektromotor (11) elektronisch kommutiert ist.

7. Elektrisch betätigter Kupplungsaktor nach einem der Ansprüche 4 oder 6, **dadurch gekennzeichnet, dass** bei fehlender Versorgungsspannung ein Transistor (T₁) in Abhängigkeit von der gleichgerichteten induzierten Spannung eine Eingangsspannung für einen zweiten Transistor (T₃), der die Gate-Spannung der Mosfets (M1, M2, M3, M4, M5, M6) steuert, ausgibt.

8. Elektrisch betätigter Kupplungsaktor nach Anspruch 7, **dadurch gekennzeichnet, dass** ein dritter Transistor (T₂) bei Vorliegen der Versorgungsspannung die Wirkung der beiden anderen Transistoren (T1, T2) ausschaltet.

9. Elektrisch betätigter Kupplungsaktor nach einem der Ansprüche 4 bis 8, **dadurch gekennzeichnet, dass** bei fehlender Versorgungsspannung der für die Versorgung der Mosfets (M1, M2, M3, M4, M5, M6) vorgesehene Treiber (12) hochohmig ist.

10. Elektrisch betätigter Kupplungsaktor nach einem der Ansprüche 3 bis 9, **dadurch gekennzeichnet, dass** die induzierte Spannung an einer nicht kurzgeschlossenen Wicklung gemessen wird.

11. Elektrisch betätigter Kupplungsaktor nach einem der Ansprüche 1 bis 5, **dadurch gekennzeichnet, dass** bei vorhandener Versorgungsspannung und einem Abschalten des Elektromotors durch einen Reset am Treiber (12) anliegende Pegel für die Mosfets (M2, M4, M6) niederohmig gesetzt werden, die im generatorischen Betrieb betrieben werden und die Pegel der übrigen Mosfets (M1, M3, M5) hochohmig gesetzt werden.

12. Elektrisch betätigter Kupplungsaktor nach einem der Ansprüche 1 bis 11, **dadurch gekennzeichnet, dass** ein elektrischer Energiespeicher (C2) vorgesehen wird, der bei fehlender Versorgungsspannung eine Spannung zum Betrieb einer Zusatzelektronik (15a) zur Steuerung des generatorischen Betriebs des Elektromotors (11) während eines Resets bereitstellt.

## Claims

1. Electrically operated clutch actuator having an operating element which acts on a clutch and is driven by a rotor of an electric motor (11), with the clutch actuator being moved to a stop by restoring forces of the clutch in the non-driven state, **characterized in that** the rotation speed of the rotor is reduced by generator operation of the electric motor (11) in the non-driven state as a function of the voltage induced by generator operation.

2. Electrically operated clutch actuator according to Claim 1, **characterized in that** the induced voltage is rectified.

3. Electrically operated clutch actuator according to Claim 1 or 2, **characterized in that** at least two phases (V, W, X) of the electric motor (11) are shortcircuited during generator operation as a function of the induced voltage.

4. Electrically operated clutch actuator according to Claim 3, **characterized in that** each phase (V, W, X) can be connected to a supply voltage by means of MOSFETs (M1, M2, M3, M4, M5, M6).

5. Electrically operated clutch actuator according to one of Claims 1 to 4, **characterized in that** the electric motor (11) is a DC motor.

6. Electrically operated clutch actuator according to one of Claims 1 to 5, **characterized in that** the electric motor (11) is electronically commutated.

7. Electrically operated clutch actuator according to one of Claims 4 or 6, **characterized in that**, when a supply voltage is not applied, a transistor (T₁) outputs an input voltage for a second transistor (T₃), which controls the gate voltage of the MOSFETs (M1, M2, M3, M4, M5, M6), as a function of the rectified induced voltage.

8. Electrically operated clutch actuator according to Claim 7, **characterized in that** a third transistor (T₂) switches off the action of the two other transistors (T₁, T₃) when the supply voltage is applied.

9. Electrically operated clutch actuator according to one of Claims 4 to 8, **characterized in that**, when a supply voltage is not applied, the driver (12) provided for supplying power to the MOSFETs (M1, M2, M3, M4, M5, M6) has a high impedance.

10. Electrically operated clutch actuator according to one of Claims 3 to 9, **characterized in that** the induced voltage is measured at a winding which is not shortcircuited.

11. Electrically operated clutch actuator according to one of Claims 1 to 5, **characterized in that**, when a supply voltage is applied and the electric motor is switched off by a reset, levels, which are applied to the driver (12), for the MOSFETS (M2, M4, M6), which are operated in generator mode, are set to a low impedance and the levels of the remaining MOSFETs (M1, M3, M5) are set to a high impedance.

12. Electrically operated clutch actuator according to one of Claims 1 to 11, **characterized in that** an electrical energy storage means (C2) is provided, the said energy storage means, when a supply voltage is not applied, providing a voltage for operating additional electronics (15a) for controlling generator operation of the electric motor (11) during a reset.

## Revendications

1. Actionneur d'accouplement à commande électrique comprenant un élément d'actionnement qui agit sur un accouplement et qui est entraîné par un rotor d'un moteur électrique (11), l'actionneur d'accouplement, lorsqu'il n'est pas entraîné, étant déplacé contre une butée par les forces de rappel de l'accouplement, **caractérisé en ce que** la vitesse de rotation du rotor est réduite par un fonctionnement du moteur électrique (11) en tant que générateur en l'absence d'entraînement en fonction de la tension induite par le fonctionnement en tant que générateur.

2. Actionneur d'accouplement à commande électrique selon la revendication 1, **caractérisé en ce que** la tension induite est redressée.

3. Actionneur d'accouplement à commande électrique selon la revendication 1 ou 2, **caractérisé en ce que** suivant la tension induite, au moins deux phases (V, W, X) du moteur électrique (11) sont mises en court-circuit lors du fonctionnement en tant que générateur.

4. Actionneur d'accouplement à commande électrique selon la revendication 3, **caractérisé en ce que** chaque phase (V, W, X) peut être connectée à une tension d'alimentation au moyen de Mosfets (M1, M2, M3, M4, M5, M6).

5. Actionneur d'accouplement à commande électrique selon l'une des revendications 1 à 4, **caractérisé en ce que** le moteur électrique (11) est un moteur à courant continu.

6. Actionneur d'accouplement à commande électrique selon l'une des revendications 1 à 5, **caractérisé en ce que** le moteur électrique (11) est commuté de manière électronique.

7. Actionneur d'accouplement à commande électrique selon l'une des revendications 4 ou 6, **caractérisé en ce qu'**en l'absence de tension d'alimentation, un transistor (T₁) délivre une tension d'entrée en fonction de la tension induite redressée pour un deuxième transistor (T₃) qui commande la tension de gâchette des Mosfets (M1, M2, M3, M4, M5, M6).

8. Actionneur d'accouplement à commande électrique selon la revendication 7, **caractérisé en ce qu'**un troisième transistor (T₂) annule l'effet des deux autres transistors (T₁, T₃) en présence de la tension d'alimentation.

9. Actionneur d'accouplement à commande électrique selon l'une des revendications 4 à 8, **caractérisé en ce qu'**en l'absence de la tension d'alimentation, l'étage d'attaque (12) prévu pour l'alimentation des Mosfets (M1, M2, M3, M4, M5, M6) est à haute impédance.

10. Actionneur d'accouplement à commande électrique selon l'une des revendications 3 à 9, **caractérisé en ce que** la tension induite est mesurée sur un enroulement non court-circuité.

11. Actionneur d'accouplement à commande électrique selon l'une des revendications 1 à 5, **caractérisé en ce que** lorsque la tension d'alimentation est présente et que le moteur électrique est arrêté par une réinitialisation de l'étage d'attaque (12), le niveau appliqué pour les Mosfets (M2, M4, M6) qui fonctionnent en mode générateur est amené à basse impédance et le niveau des autres Mosfets (M1, M3, M5) est amené à haute impédance.

12. Actionneur d'accouplement à commande électrique selon l'une des revendications 1 à 11, **caractérisé en ce qu'**il est prévu un accumulateur d'énergie électrique (C2) qui, en l'absence de tension d'alimentation, fournit une tension pour le fonctionnement d'une électronique supplémentaire (15a) destinée à commander le fonctionnement du moteur électrique (11) en tant que générateur pendant une réinitialisation.
